# EUROPÄISCHE PATENTSCHRIFT

(11) **EP 2 961 593 B1**
(45) Veröffentlichungstag und Bekanntmachung des Hinweises auf die Patenterteilung: **27.11.2019**
(21) Anmeldenummer: 14713751.7
(22) Anmeldetag: 05.02.2014
(51) Int. Cl.: B29D 30/06, B29C 35/02

(54) **VERFAHREN ZUM VORHEIZEN VON MINDESTENS EINER FORM**
METHOD FOR PREHEATING AT LEAST ONE MOULD
PROCÉDÉ DE PRÉCHAUFFAGE D'AU MOINS UN MOULE

(30) Priorität: 26.02.2013 DE 102013003479
(43) Veröffentlichungstag der Anmeldung: 06.01.2016
(73) Patentinhaber: Harburg-Freudenberger Maschinenbau GmbH, 21079 Hamburg (DE)
(72) Erfinder: ZIMMERMANN, Arne, 21717 Deinste (DE); MEINCKE, Rüdiger, 22547 Hamburg (DE)
(74) Vertreter: Klickow & Wetzel PartGmbB
(86) Internationale Anmeldenummer: PCT/DE2014/000047
(87) Internationale Veröffentlichungsnummer: WO 2014/131387

(56) Entgegenhaltungen:
- EP-A1- 0 638 409
- WO-A1-2007/013113
- JP-A- H0 671 651
- JP-A- H1 158 388
- JP-A- S5 732 931
- JP-U- H0 513 709
- US-A- 2 043 935
- US-A- 4 804 318

## Beschreibung

Die Erfindung betrifft ein Verfahren zur Vorheizung von mindestens einer Form für eine Reifenheizpresse, wobei das Vorheizen vor einer Anordnung der Form im Bereich der Reifenheizpresse erfolgt, bei der eine Kopplung zur Beaufschlagung der Form mit einem Heizmedium verwendet wird.

Es ist bereits bekannt, Formen für eine Reifenheizpresse vor einer Anordnung im Bereich der Reifenheizpresse vorzuheizen. Der Takt der Heizpresse kann hierdurch deutlich erhöht werden. Typischerweise wird eine Taktrate von zwei Stunden auf eine Größenordnung von 30 Minuten reduziert.

Gemäß einem bekannten Verfahren wird ein Heizmantel der Form über eine Verschlauchung an eine Quelle für Heißdampf angeschlossen. Der einen Heizmantel der Form durchströmende Heißdampf erwärmt hierbei die Form.

Ein derartiges Verfahren ist beispielsweise aus Gründen der Arbeitssicherheit problematisch, da während der Durchführung des Vorheizens die Form von außen frei zugänglich ist und insbesondere eine Demontage der Verschlauchung von der heißen Form erfolgen muss. Die durchzuführenden Arbeitsabläufe fordern darüber hinaus einen entsprechenden Arbeitsaufwand.

Aus der US 2043935 A ist bereits eine Reifenheizpresse bekannt, deren Form innerhalb einer haubenartigen Außenkonstruktion angeordnet wird. Nach einem Einsetzen eines unvulkanisierten Reifenrohlings erfolgt eine Wärmezufuhr.

Ähnliche Einrichtungen werden auch in der JP H1158388 A, der JP S5732931 A sowie der JP H0513709 U beschrieben.

Weitere Heizpressenkonstruktionen sind aus der JP H0671651 A, der EP 0638409 A1 sowie der WO 2007/013113 A1 bekannt.

Aus der US 4,804,318 A ist eine weitere Reifenheizpresse bekannt. Es wird hierbei eine in einer vertikalen Richtung positionierbare Isolierhaube verwendet.

Die japanische Druckschrift JP S57 32931 A offenbart eine Vorrichtung zum Vorheizen einer Form für eine Reifenheizpresse, die eine vertikal positionierbare Isolierhaube und Heizplatten zum Heizen der Form aufweist.

Aufgabe der vorliegenden Erfindung ist es, ein Verfahren der einleitend genannten Art derart zu konstruieren, dass eine vereinfachte Handhabung unterstützt wird.

Diese Aufgabe wird durch die Merkmale des Anspruchs 1 gelöst, wobei ein Aufnahmebehälter und eine Isolierhaube verwendet wird und Wobei der Aufnahmebehälter zur Aufnahme der Form von einem Gestell gehaltert wird und wobei die Isolierhaube relativ zu dem Aufnahmebehälter derart positioniert wird, dass die Isolierhaube in einer vertikalen Richtung verfahren wird und dass die Vorheizung der Form innerhalb des Aufnahmebehälters durchgeführt wird.

Das erfindungsgemäße Verfahren ermöglicht es, die zu beheizende Form innerhalb des Behälters anzuordnen. Nach einer Herstellung der erforderlichen Anschlüsse kann die Isolierhaube abgesenkt werden und umschließt den Aufnahmebehälter mit der Form. Hierdurch wird sowohl ein ungewollter Berührungskontakt mit dem Behälter und/oder der Form vermieden, darüber hinaus wird eine ungewollte Wärmeabstrahlung verhindert.

Das erfindungsgemäße Verfahren ermöglicht somit ein schnelles Vorheizen, spart Energie und erhöht die Arbeitssicherheit.

Gemäß einer bevorzugten Ausführungsform wird die Form innerhalb des Behälters auf eine Heizplatte aufgesetzt. Ebenfalls ist daran gedacht, den Heizmantel der Form direkt an eine Heißdampfquelle anzuschließen.

Gemäß einer bevorzugten Ausführungsform wird zur Verbindung mit der Heißdampfquelle eine automatische Kopplung verwendet. Ebenfalls wird bevorzugt eine Temperaturregelung zur exakten Vorgabe einer Formtemperatur verwendet.

Typischerweise wird die Heizplatte mit Dampf beheizt. Ebenfalls kann der Aufnahmebehälter mit Dampf beheizt werden. Vorzugsweise sind jeweils Strömungskanäle verwendet, durch die der Heißdampf hindurchgeleitet wird. Die Durchleitung kann in einem Kreislauf erfolgen.

Zur Positionierung der Isolierhaube wird vorzugsweise eine Pneumatik eingesetzt. Unterhalb des Aufnahmebehälters können Steuerventile für den Heißdampf angeordnet sein. Die Steuerventile können als Ventilbatterie angeordnet sein. Es ist möglich, durch Einsatz von hydraulischen oder pneumatischen Linearantrieben die Isolierhaube gesteuert abzusehen.

Um eine kostengünstige Konstruktion zu unterstützen, wird erfindungsgemäß die Pneumatik nicht zum gesteuerten absenken verwendet. Vielmehr wird die Isolierhaube durch ihr Eigengewicht und entgegen einem einstellbaren pneumatischen Widerstand kontrolliert abgesenkt.

Das Verfahren in die geöffnete Position erfolgt leistungsgesteuert durch die Pneumatik. Das bedeutet, dass die lineare Bewegung in die geschlossene Position ohne Verwendung von Energie einzig durch die Gewichtskraft der Isolierhaube entgegen dem pneumatischen Widerstand erfolgt und nur für das Verfahren in die geöffnete Position Energie aufgewendet wird.

In den Zeichnungen sind Ausführungsbeispiele der Erfindung schematisch dargestellt. Es zeigen:
- Figur 1: Eine Seitenansicht der Vorrichtung (1) zur Vorheizung mit abgesenkter und gestrichelt eingezeichnet angehobener Isolierhaube (2),
- Figur 2: eine Draufsicht auf die Anordnung gemäß Figur 1, wobei Teile des Hubmechanismus (8) nicht dargestellt sind.
- Figur 3: eine Vorderansicht der Vorrichtung (1) gemäß Figur 1 mit abgesenkter Isolierhaube (2),
- Figur 4: eine Ansicht auf die Vorrichtung (1) von unten gemäß Figur 3,
- Figur 5: die Schnittdarstellung A - A der Figur 3 der Vorrichtung (1) mit abgesenkter Isolierhaube (2),
- Figur 6: eine Draufsicht auf die Anordnung gemäß Figur 5,
- Figur 7: eine perspektivische Darstellung der Vorrichtung (1) mit abgesenkter Isolierhaube (2),
- Figur 8: eine perspektivische Darstellung der Vorrichtung (1) mit geöffneter Isolierhaube (2).

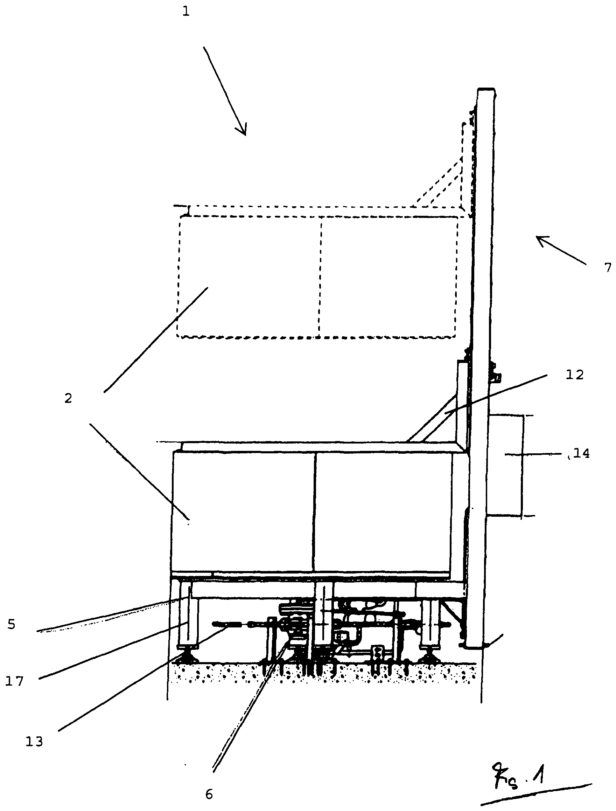

Figur 1 zeigt eine Seitenansicht der Vorrichtung zur Vorheizung (1) in einer ersten Position mit abgesenkter Isolierhaube (2) und gestrichelt eingezeichnet angehobener Isolierhaube (2). In der abgesenkten ersten Position umschließt die Isolierhaube (2) den Aufnahmebehälter mit der Form und der Heizplatte (3). Grundsätzlich ist die Heizplatte (3) integraler Bestandteil des Aufnahmebehälters (19). Die Heizplatte kann aber auch als Bauteil innerhalb der Vorrichtung (1) angeordnet sein, auf die der Aufnahmebehälter (19) abgestellt wird.

Der Hubmechanismus (7) wird durch eine Steuerung (14) gesteuert und umfasst im Wesentlichen ein Hubgerüst (8) sowie einen Antrieb (11). Der Antrieb (11) wird vorzugsweise durch einen linear arbeitenden Pneumatikantrieb gebildet. Dieser pneumatische Antrieb, der über die Steuerung (14) gesteuert wird, verfährt die Isolierhaube (2) leistungsgesteuert von der unteren in die obere Position.

Die lineare Bewegung von der oberen (geöffnete) in die untere (geschlossene) Position wird nicht durch eine pneumatische Leistung initialisiert, sondern die Isolierhaube (2) bewegt sich aufgrund ihrer Gewichtskraft und entgegen des pneumatischen Widerstandes des Antriebs (11) von der oberen in die untere Position. Das heißt, die Sinkgeschwindigkeit der Isolierhaube (2) wird bestimmt durch den eingestellten pneumatischen Widerstand in Abhängigkeit von der vorliegenden Gewichtskraft der Isolierhaube (2).

Die Vorrichtung zur Vorheizen (1) besteht in ihrer Basis aus einem Gestell (5), welches die Bauelemente haltert. Die Heizung (6) sowie weitere Versorgungselemente (nicht dargestellt) sind im unteren Bereich und von dem Gestell (5) umfasst angeordnet. Die Isolierhaube (2) wird durch eine Tragvorrichtung (12) mit dem Hubmechanismus (7) beweglich gekoppelt.

Der Tragmechanismus (12) kann zum einen durch den Hubmechanismus (7) lineare zwischen der geöffneten Position und der geschlossenen Position bewegt werden und zum anderen kann optional zusätzlich oder stattdessen eine Schwenkbewegung realisierbar sein. Unterstützt die Tragvorrichtung (12) eine Schwenkbewegung, so ist sie derart ausgestaltet, dass an der Kopplungsstelle zum Hubmechanismus (7) ein geeignetes Drehgelenk oder ein von dem pneumatischen Antrieb bewegbarer Kulissenstein in einer Führung vorgesehen ist.

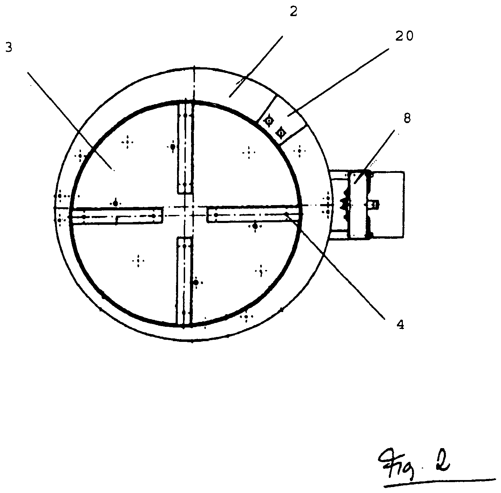

Figur 2 zeigt eine Draufsicht auf die Anordnung gemäß Figur 1, wobei die Tragvorrichtung (12) nicht dargestellt ist. Die Isolierhaube (2) ist in ihrer Außenkontur dargestellt und in Axialrichtung derart in der Vorrichtung zur Vorheizung (1) angeordnet, dass die Heizplatte (3) und die Isolierplatte (4) konzentrisch innerhalb der Isolierhaube (2) in der geschlossen-Position ausgerichtet sind.

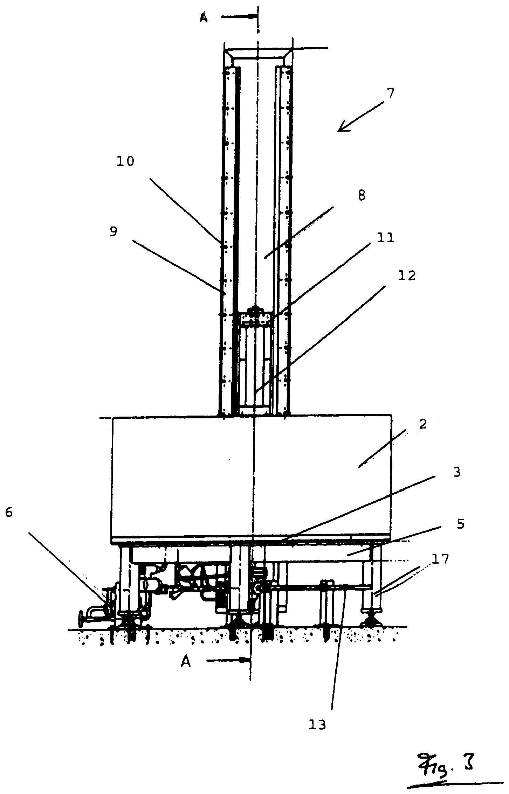

Figur 3 zeigt eine Vorderansicht der Vorrichtung (1) gemäß Figur 1 mit abgesenkter Isolierhaube (2). Die Heizplatte (3) wird vorzugsweise mit Dampf, insbesondere Heißdampf beheizt. Ebenfalls kann der Aufnahmebehälter (19) für die vorzuheizende Form mit Dampf beheizt werden. Die Vorrichtung (1) unterstützt insbesondere diese Ausgestaltung, da Aufnahmebehälter (19) und Heizplatte (3) bevorzugt als Bauelemente ausgeführt sind.

Vorzugsweise sind jeweils Strömungskanäle innerhalb der zu beheizenden Vorrichtungskomponenten verwendet, durch die der Heißdampf hindurchgeleitet wird. Die Durchleitung kann in einem Kreislauf erfolgen. Die Heizung (6) und die Heißdampf-Versorgungsleitungen in Form von Heizleitungen (13) sind im Bereich des Gestells (5) angeordnet. Je nach realisierter Versorgung können die zu beheizenden Komponenten (3, 19) unabhängig voneinander verrohrt oder mit einer Kreislaufverrohrung verbunden sein.

Der Aufnahmebehälter (19) mit der zu beheizenden Form ist hier nicht sichtbar innerhalb der Isolierhaube (2) angeordnet und unmittelbar auf der Heizplatte (3) stehend. Die Isolierhaube (2) ist an die Tragvorrichtung (12) gekoppelt und mittels der Hubvorrichtung (7) linear verfahrbar. der Hubmechanismus (7) ist im Wesentlichen gebildet durch das Hubgerüst (8) sowie Linearführungen (9) und dem Antrieb (11), welche durch geeignete Montagemittel (10) verbunden sind. Der Antrieb (11) ist vorzugsweise ein pneumatisch arbeitender Linearzylinder, der die zum Öffnen der Vorrichtung (1) erforderliche Bewegungsleistung realisiert und das kontrollierte Absenken von der geöffnete in die geschlossene Position durch einen einstellbaren pneumatischen Widerstand entgegen der Gewichtskraft der Isolierhaube (2) ermöglicht.

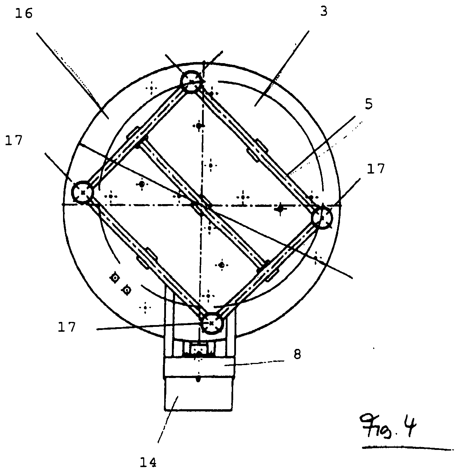

Figur 4 zeigt eine Ansicht auf die Vorrichtung (1) von unten gemäß Figur 3. Dargestellt ist das Gestell (5) ohne die Versorgungseinrichtungen wie Heizleitungen (13) oder Heizung (6). Die Anordnung und Ausrichtung des Gestells (5) mit seinen Längs- und Querverstrebungen und den Standfüßen (17) in den jeweiligen Eckenbereichen des Gestells (5) ist von einer zu dem Hubmechanismus (7) fluchtenden Positionierung abweichend.

Die Verdrehung des Gestells (5) relativ zum Hubgerüst (8) hat im Wesentlichen zwei Gründe. Einerseits ist die Festlegung des Hubgerüstes (8) an einer Gestellposition über Eck und in unmittelbarer Nähe zu einem der Standfüße (17) einer verbesserten Festigkeit und Standfestigkeit der Konstruktion geschuldet. Andererseits ist die Verteilung der Belastung durch die Heizplatte (3), welche schematisch durch eine unterbrochene Linie dargestellt ist und dem darauf zu liegen kommenden Aufnahmebehälter (19) mit der zu beheizenden Form (nicht dargestellt) auf das Gestell (5) günstiger.

Durch die außermittige Anordnung der Heizplatte (3) und damit der Lage des darauf abzustellenden Aufnahmebehälters (19) (wenn zweiteilig ausgeführt) können auch die Dampfversorgungsleitungen (20) für den Aufnahmebehälter (19), welche seitlich des Aufnahmebehälters (19) festgelegt sind (nicht dargestellt), innerhalb der Isolierhaube (2) aufgenommen werden. Sinngemäß ist die gleiche Situation vorliegend, wenn der Aufnahmebehälter (19) die Heizplatte (3) als integralen Bestandteil umfasst. Umrandet wird die Heizplatte (3) von einem konzentrischen Ring aus Isoliermaterial (16).

Aufgrund der außermittig verschobenen Gewichtskraftlinie der Gesamtkonstruktion verteilt sich die von den Standfüßen (17) zu tragende Last gleichmäßiger. Die gewählte rechteckige Gestaltung des Gestells (5) unterstützt die gleichmäßige Lastenverteilung. Vorzugsweise und in Abhängigkeit von der Gestaltung des Versatzes der Heizplatte (3) außermittig wird die Gestellpositionierung um einen Winkel von ca. 45 Grad aus der um die zum Hubgerüst (8) fluchtenden Lage gewählt.

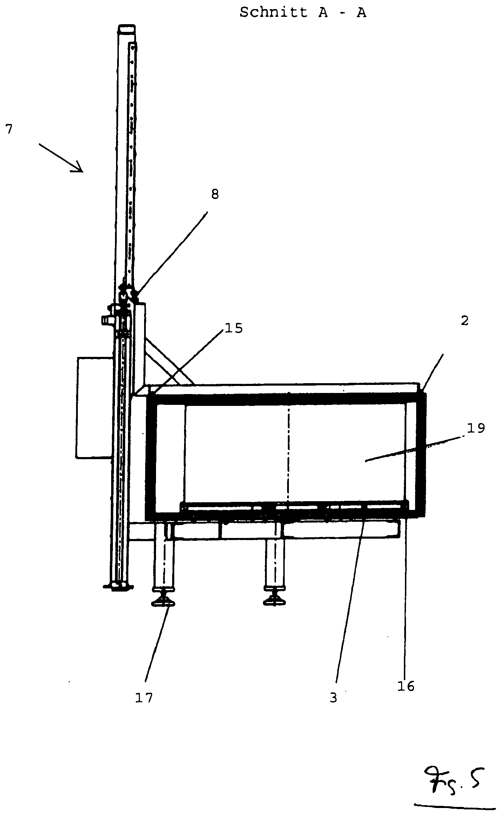

Figur 5 zeigt die Schnittdarstellung A - A der Figur 3 der Vorrichtung (1) mit abgesenkter Isolierhaube (2). Innerhalb der Isolierhaube (2) ist der Aufnahmebehälter (19) skizziert, der auf der Heizplatte (3) oder dem Gestell (5) abgestellt wird, bevor die Isolierhaube (2) in die geschlossen-Position verfährt. Die Heizplatte (3) wird von Isoliermaterial (16) mit konzentrischer Ringgestalt umrandet, wenn die Isolierhaube (2) in der geschlossenen Position steht.

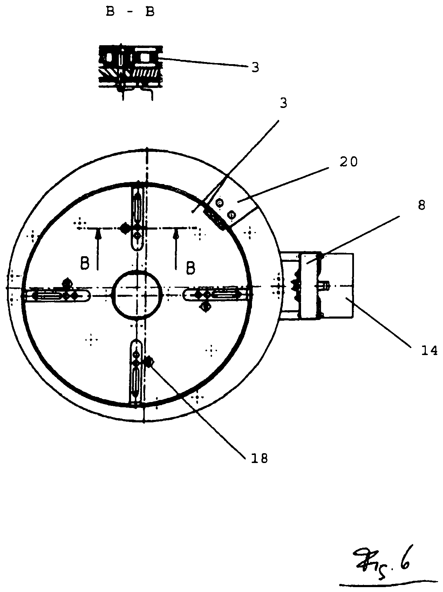

Figur 6 zeigt eine Draufsicht auf die Anordnung gemäß Figur 5 und eine Teilschnittdarstellung der Heizplatte (3) im Bereich der Heizplattenbefestigung (18).

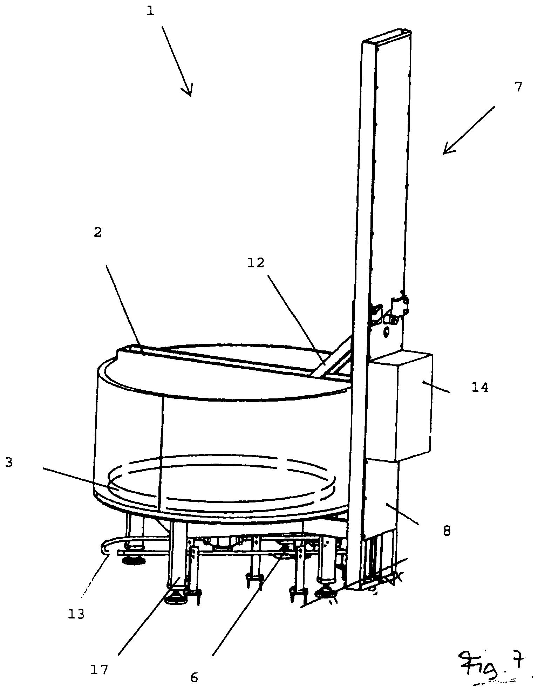

Figur 7 zeigt eine perspektivische Darstellung der Vorrichtung (1) mit abgesenkter Isolierhaube (2). An der rückwärtigen Seite des Hubgerüstes (8) ist die Steuerung (14) festgelegt. Eine Heizleitung (13), vorzugsweise eine Heißdampfleitung, ist vorgesehen, um die Heizplatte (3) und/oder den Aufnahmebehälter (19) zu beheizen, um die Form im Innern des Aufnahmebehälters (19) auf die gewünschte Temperatur vorzuheizen. Werden Heizplatte (3) und Aufnahmebehälter (19) von der Heizung (6) der Vorrichtung (1) zur Vorheizung mit Heizenergie versorgt, können sowohl eine Parallelschaltung (Einzelversorgung) als auch eine Reihenschaltung (Kreislaufversorgung) des Heizmediums realisiert werden.

Vorzugsweise ist das Heizmedium Dampf oder Heißdampf. Es sind auch elektrische Widerstandsheizungen oder andere wärmeerzeugenden Prinzipien möglich, eine konstruktionsbedingte Beschränkung besteht nicht. Vorteil der Beheizung durch Heißdampf ist die kostengünstige Bereitstellung insbesondere dann, wenn wie bei der Reifenherstellung vorliegend, eine Vielzahl von zu beheizenden Aggregaten über ein Kesselhaus versorgt werden können.

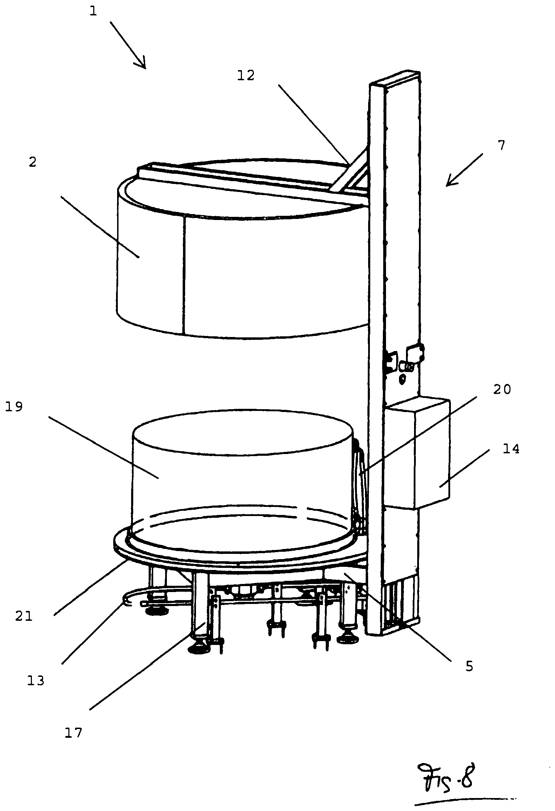

Figur 8 zeigt eine perspektivische Darstellung der Vorrichtung (1) mit geöffneter Isolierhaube (2). Die Vorrichtung (1) ist in Figur 8 mit einer Platte (21) ausgeführt, um dem Aufnahmebehälter (19) eine Abstellfläche zu bieten. Alternativ kann der Aufnahmebehälter (19) direkt auf dem Gestell (5) abgestellt werden. Ist die Heizplatte (3) nicht als integraler Bestandteil der Vorrichtung (1) ausgeführt, kann sie wie die hier gezeigte Platte (21) innerhalb der Vorrichtung (1) angeordnet sein.

Der Aufnahmebehälter (19) verfügt an seiner Seitenfläche über Dampfversorgungsleitungen (20). Durch die konzentrische Lage der Isolierhaube (3) und des Aufnahmebehälters (19) zueinander ist es möglich, dass die Isolierhaube über den Aufnahmebehälter (19) mit den Dampfversorgungsleitungen (20) positioniert werden kann.

## Patentansprüche

1. Verfahren zur Vorheizung von mindestens einer Form für eine Reifenheizpresse, wobei das Vorheizen vor einer Anordnung der Form im Bereich der Reifenheizpresse erfolgt, bei der eine Kopplung zur Beaufschlagung der Form mit einem Heizmedium verwendet wird, wobei ein Aufnahmebehälter (19) und eine Isolierhaube (2) verwendet wird und wobei der Aufnahmebehälter (19) zur Aufnahme der Form von einem Gestell (5) gehaltert wird und wobei die Isolierhaube (2) relativ zu dem Aufnahmebehälter (19) derart positioniert wird, dass die Isolierhaube (2) in einer vertikalen Richtung verfahren wird und dass die Vorheizung der Form innerhalb des Aufnahmebehälters durchgeführt wird.

2. Verfahren (1) nach Anspruch 1, **dadurch gekennzeichnet, dass** die Isolierhaube (2) durch einen Hubmechanismus (7) aufweisend einen pneumatischen Antrieb (11) verfahrbar ist.

3. Verfahren nach Anspruch 1 oder 2, **dadurch gekennzeichnet, dass** die Isolierhaube (2) durch einen Hubmechanismus (7) aufweisend einen pneumatischen Antrieb (11) mit einstellbarem Widerstand kontrolliert absenkbar ist.

4. Verfahren nach Anspruch 1 **dadurch gekennzeichnet, dass** wenigstens eine Heizplatte (3) zur Beheizung des Aufnahmebehälters (19) vorgesehen ist.

5. Verfahren nach Anspruch 1 **dadurch gekennzeichnet, dass** die Vorheizung eines Aufnahmebehälters (19) mit integrierter Heizplatte (3) unterstützt ist.

6. Verfahren nach einem der Ansprüche 4 oder 5, **dadurch gekennzeichnet, dass** der Aufnahmebehälter (19) und/oder die Heizplatte (3) an eine Heißdampfquelle (6) anschließbar ist.

7. Verfahren nach Anspruch 6, **dadurch gekennzeichnet, dass** der Anschluss durch eine automatische Kopplung erfolgt, wenn der Aufnahmebehälter (19) in die Vorrichtung (1) eingebracht ist.

8. Verfahren nach Anspruch 1, **dadurch gekennzeichnet, dass** die Isolierhaube (2) ein einseitig offener Behälter ist, sodass er über einen Aufnahmebehälter (19) gestülpt werden kann.

9. Verfahren nach Anspruch 8, **dadurch gekennzeichnet, dass** die Isolierhaube (2) an ihrer einseitigen Öffnung einen konzentrischen Ring aufweist.

10. Verfahren nach Anspruch 8 oder 9, **dadurch gekennzeichnet, dass** die Isolierhaube (2) aus einem Isoliermaterial ausgebildet wird.

11. Verfahren nach Anspruch 1, **dadurch gekennzeichnet, dass** das Hubgerüst (8) an einer Position des Gestells (5) über Eck festgelegt wird.

12. Verfahren nach Anspruch 1, **dadurch gekennzeichnet, dass** die Positionierung des Aufnahmebehälters (19) innerhalb der Vorrichtung (1) und relativ zur Isolierhaube (2) außermittig unterstützt wird.

## Claims

1. Method for preheating at least one mould for a tyre heating press, wherein the preheating is carried out before the mould is arranged in the region of the tyre heating press, in which a coupling is used to apply a heating medium to the mould, wherein a holding container (19) and an insulating hood (2) are used, and wherein the holding container (19) for holding the mould is held by a frame (5), wherein the insulating hood (2) is positioned relative to the holding container (19) in such a way that the insulating hood (2) is moved in a vertical direction, and that the preheating of the mould is carried out within the holding container.

2. Method (1) according to Claim 1, **characterized in that** the insulating hood (2) can be moved by a lifting mechanism (7) having a pneumatic drive (11).

3. Method according to Claim 1 or 2, **characterized in that** the insulating hood (2) can be lowered under control by a lifting mechanism (7) having a pneumatic drive (11) with adjustable resistance.

4. Method according to Claim 1, **characterized in that** at least one heating plate (3) for heating the holding container (19) is provided.

5. Method according to Claim 1, **characterized in that** the preheating of a holding container (19) with integrated heating plate (3) is supported.

6. Method according to either of Claims 4 and 5, **characterized in that** the holding container (19) and/or the heating plate (3) can be connected to a hot steam source (6).

7. Method according to Claim 6, **characterized in that** the connection is made by an automatic coupling when the holding container (19) is introduced into the apparatus (1).

8. Method according to Claim 1, **characterized in that** the insulating hood (2) is a container open on one side, so that it can be slipped over a holding container (19).

9. Method according to Claim 8, **characterized in that** the insulating hood (2) has a concentric ring on its opening on one side.

10. Method according to Claim 8 or 9, **characterized in that** the insulating hood (2) is formed from an insulating material.

11. Method according to Claim 1, **characterized in that** the lifting frame (8) is fixed via a corner at a position of the frame (5).

12. Method according to Claim 1, **characterized in that** the positioning of the holding container (19) within the apparatus (1) and eccentrically relative to the insulating hood (2) is supported.

## Revendications

1. Procédé de préchauffage d'au moins un moule destiné à une presse de pneumatique chauffante, le préchauffage étant effectué avant d'agencer le moule dans la région de la presse de pneumatique chauffante dans laquelle un couplage avec un milieu chauffant est utilisé pour produire le moule, un réceptacle (19) et un capot isolant (2) étant utilisés et le réceptacle (19) destiné à recevoir le moule étant supporté par un cadre (5), et le capot isolant (2) étant positionné par rapport au réceptacle (19) de telle sorte que le capot isolant (2) soit déplacé dans une direction verticale et que le préchauffage du moule soit effectué à l'intérieur du réceptacle.

2. Procédé (1) selon la revendication 1, **caractérisé en ce que** le capot isolant (2) peut être déplacé par un mécanisme de levage (7) comportant un entraînement pneumatique (11).

3. Procédé selon la revendication 1 ou 2, **caractérisé en ce que** le capot isolant (2) peut être abaissé par un mécanisme de levage (7) comportant un entraînement pneumatique (11) en étant commandé avec une résistance réglable.

4. Procédé selon la revendication 1, **caractérisé en ce qu'**au moins une plaque chauffante (3) est prévue pour chauffer le réceptacle (19).

5. Procédé selon la revendication 1, **caractérisé en ce que** le préchauffage d'un réceptacle (19) est favorisé par une plaque chauffante intégrée (3).

6. Procédé selon l'une des revendications 4 ou 5, **caractérisé en ce que** le réceptacle (19) et/ou la plaque chauffante (3) peuvent être raccordés à une source de vapeur chaude (6).

7. Procédé selon la revendication 6, **caractérisé en ce que** le raccordement est effectué par un accouplement automatique lorsque le réceptacle (19) est introduit dans le dispositif (1).

8. Procédé selon la revendication 1, **caractérisé en ce que** le capot isolant (2) est un récipient ouvert d'un côté de sorte qu'il peut être retourné sur un réceptacle (19).

9. Procédé selon la revendication 8, **caractérisé en ce que** le capot isolant (2) comporte un anneau concentrique au niveau de son ouverture situé sur un côté.

10. Procédé selon la revendication 8 ou 9, **caractérisé en ce que** le capot isolant (2) est formé d'un matériau isolant.

11. Procédé selon la revendication 1, **caractérisé en ce que** la structure de levage (8) est fixée au-dessus d'un coin à une position du cadre (5).

12. Procédé selon la revendication 1, **caractérisé en ce que** le positionnement du réceptacle (19) à l'intérieur du dispositif (1) et par rapport au capot isolant (2) est assisté de manière excentrée.
